## Europäisches Patentamt

## European Patent Office

## Office européen des brevets

(19)

(11) **EP 0 758 527 B1**

(12) **EUROPÄISCHE PATENTSCHRIFT**

(45) Veröffentlichungstag und Bekanntmachung des Hinweises auf die Patenterteilung:
**27.06.2001 Patentblatt 2001/26**

(51) Int Cl.[7]: **A22C 13/00**

(21) Anmeldenummer: **96112210.8**

(22) Anmeldetag: **29.07.1996**

(54) **Polyamid-Wursthülle mit verbesserter Schälcharakteristik**

Sausage casings based on polyamide having improved peelability characteristics

Enveloppes pour saucisses à base de polyamides ayant une caractéristique de pelabilité améliorée

(84) Benannte Vertragsstaaten:
**AT BE CH DE ES FR GB IT LI**

(30) Priorität: **11.08.1995 DE 19529603**

(43) Veröffentlichungstag der Anmeldung:
**19.02.1997 Patentblatt 1997/08**

(73) Patentinhaber: **WOLFF WALSRODE AG**
**29655 Walsrode (DE)**

(72) Erfinder:
• **Pophusen, Dirk**
**29664 Walsrode (DE)**

• **Cardinal Von Widdern, Michael Hennig**
**29683 Fallingbostel (DE)**

(74) Vertreter: **Pettrich, Klaus-Günter, Dr. et al**
**c/o Bayer AG,**
**Konzernbereich RP**
**Patente und Lizenzen**
**51368 Leverkusen (DE)**

(56) Entgegenhaltungen:
**EP-A- 0 603 676      EP-A- 0 603 678**
**EP-A- 0 640 289      EP-A- 0 658 310**
**DE-A- 4 339 337      FR-A- 2 441 558**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Polyamid-Wursthülle mit verbesserter Schälcharakteristik und insbesondere reduzierter Neigung zum Aufplatzen beim Anschneiden des Wurstproduktes.

Die vorliegende Erfindung betrifft eine schlauchförmige nahtlose mehrschichtige Wursthülle aus mindestens zwei Schichten überwiegend enthaltend Polyamid, einer Schicht mit wasserdampfsperrendem und einer Schicht mit sauerstoffsperrendem Charakter, die wegen ihrer besonders guten Schälbarkeit und dem deutlich reduzierten Risiko des Längsaufplatzens im gefüllten Zustand deutliche Verbesserungen für den Endverbraucher in sich birgt.

Die Umhüllungen von Brüh- und Kochwürsten müssen bekannterweise ein umfangreiches spezifisches Anforderungsprofil erfüllen um den Anwendungen in der Praxis gerecht zu werden.

Zu diesen Forderungen zählen:

- hohe Festigkeit, zylindrische Form, Prallheit (Faltenfreies Anliegen)
- gutes Schälverhalten
- Temperaturbeständigkeit bis Sterilisationstemperatur
- sehr gute Barriereeigenschaften (Reduktion von Gewichtsverlusten und Brätvergrauung)
- hohe Bräthaftung
- leichte Schälbarkeit, gutes Anschnittverhalten
- Raffbarkeit
- Unbedenklichkeit laut Lebensmittelrecht / Ökologie
- sichere Druckfarbenhaftung

Die bisher im Markt bekannten Hüllen genügen nicht allen im Anforderungsprofil aufgeführten Punkten und weisen aber gerade im Hinblick auf das Schälverhalten (Weiterreißfestigkeit) und Anschnittverhalten deutliche Defizite auf. Verlangt wird beim Schälen der gekochten und ausgekühlten Würste ein leichtes spiralförmiges Abschälen (Abpellen) des Darmes ohne daß der Darm vorzugsweise in Längsrichtung aufreißt. Der Fachmann spricht hierbei auch von einem wendelförmigen streifenförmigen Schälverhalten. Bei einem vorbereiteten Einschnitt ist es dann das Schälziel, einen gleichmäßig breiten Streifen spiralförmig von der Wurst abzuschälen und die Wurst scheibenförmig freizulegen. Eine bevorzugtes Aufreißen der Wurst in Längsrichtung wird hierbei nicht akzeptiert. Dieses Schälverhalten spielt speziell bei großkalibrigen Koch- und Brühwurstsorten eine besondere Rolle, da diese vielfach in durch Schräganschnitt halbierter Form vakuumverpackt werden, um dem Kunden eine bessere Beurteilung der verpackten Wurst anbieten zu können. Dieses zu erzielende Schälverhalten steht oftmals im Gegensatz zu dem Wunsch einer prallen - gleich subjektiv frischen - Wurst.

Eine Erklärung für das bevorzugte Längsaufplatzen ergibt sich über eine mechanische Betrachtung: Nach der Kesselformel (Formel beschrieben in Schnell, Gross, Hanger; Techn. Mechanik Bd. 2, Elastostatik, S. 51 ff in Heidelberger Taschenbücher, Springer Verlag) ist bei vorgegebenem Innendruck des Brätes in der Hülle die Beanspruchung (Spannung) in Querrichtung doppelt so groß wie die Spannung in Längsrichtung. Aus dieser Bilanzierung erklärt sich das bevorzugte Längsaufreißen herkömmlicher Verpackungshüllen.

Die Herstellung einer solchen Schlauchfolie erfolgt üblicherweise in folgenden Verfahrensschritten:

1. Extrusion, Kalibrierung und Kühlung des zu reckenden Primärschlauches
2. Wiedererwärmung des Primärschlauches auf geeignete Recktemperatur
3. Biaxiales Verstrecken durch Anlegen einer Druckdifferenz zwischen Schlauchinnenvolumen und der Schlauchumgebung sowie durch die die Längsverstreckung unterstützende Längsabzugskraft.
4. Thermofixierung der biaxial gereckten Schlauchfolie
5. Aufwicklung und nachfolgende Offline-Konfektionierungsschritte (Raffen etc.)

Unter der biaxialen Verstreckung versteht der Fachmann die Quer- und Längsverstreckung des thermoplastischen Extrudates bei Temperaturen zwischen Glasübergangstemperatur und Schmelztemperatur der polymeren Werkstoffe. Die biaxiale Reckung erfolgt üblicherweise mittels einer mit einem Gas- oder Fluiddruckpolster gefüllten Blase, die zwischen zwei mit unterschiedlich hohen Umfangsgeschwindigkeiten laufenden Walzenpaaren gas- bzw. fluiddicht eingeschlossenen ist. Während das Verhältnis der unterschiedlichen Walzenumfangsgeschwindigkeiten dem Längsreckgrad entspricht, errechnet sich der Querreckgrad aus dem Verhältnis des Schlauchdurchmessers im gereckten Zustand zu dem des ungereckten Primärschlauchs. Das Reckverhältnis (RV) spiegelt den Quotienten aus Querreckgrad und Längsreckgrad wieder, der Flächenreckgrad (FR) resultiert aus dem Produkt von Längsreckgrad und Querreckgrad.

Während der Verstreckung richten sich die Moleküle des im Festkörperzustand befindlichen Folienschlauches derart aus, daß der Elastizitätmodul und die Festigkeiten sowohl in Quer- als auch in Längsrichtung in erheblichen Maße gesteigert werden.

Ausreichende Festigkeit ist dann gegeben, wenn sich die Verpackungshülle beim Füllvorgang und während der Pasteurisation oder Sterilisation vornehmlich elastisch verformt. Die Verpackungshülle muß dabei ihre zylindrische Form beibehalten und darf sich nicht ausbeulen oder krümmen. Die nach dem Stand der Technik hergestellten Wursthüllen sind mit einem möglichst isotropen Eigenschaftsbild ausgestattet. Beim Füllvorgang wird die Hülle durch den Fülldruck, der im Normalfall 1,3 bar, aber auch bis zu 1,6 bar betragen kann, elastisch um ca. 2-15 % je nach Hüllenmaterial und Fülldruck im Durchmesser gedehnt. Durch diese Nachdehnung und den anliegenden Spannungszustand werden die zuvor isotropen Festigkeitseigenschaften verändert, so daß ein Längsaufreißen bevorzugt auftreten kann.

Für die Verarbeitung von teilkristallinem, aliphatischen Polyamid (PA) zu biaxial gereckten Schlauchfolien gibt die Patentliteratur zahlreiche Hinweise. Dabei werden vornehmlich Rezepturentwicklungen für verbesserte anwendungstechnische Eigenschaften veröffentlicht.

Die DE 28 50 181 weist darauf hin, daß durch das Einmischen von olefinischen Copolymeren in das PA eine verbesserte Reckbarkeit realisiert wird. Eine Verbesserung der Weiterreißfestigkeit wird gemäß DE 2850181 dadurch erzielt, daß man statt der in der DE 2850182 verwendeten Polyamide, deren Glaspunkt sich in Abhängigkeit von der Wasseraufnahme zu tieferen Temperaturen verschieben läßt, zur Herstellung der Wursthülle eine Polymermischung aus diesen Polyamiden und modifizierten, polyamidverträglichen Polyolefinen, z.B. einem Ionomerharz, verwendet. Als Nachteil dieser Hüllen zeigt sich ruckartiges Reißverhalten, das durch die im Polymerblend vorliegenden unterschiedlich weichen Phasenstrukturen hervorgerufen wird.

Stand der Technik ist, daß das simultane biaxiale Verstrecken des Primärschlauches bei den für die Verstreckung geeigneten Recktemperaturen in einer Reckblase erfolgt und der so verstreckte Schlauch anschließend eine Wärmebehandlung erfährt.

Da das Verstrecken simultan erfolgt, ist eine gesteuerte Verstreckung bevorzugt in Quer- oder Längsrichtung nur sehr eingeschränkt möglich. Abgeleitet aus der oben beschriebenen Kesselformel erfolgt die Verstreckung durch Innendruck stärker in Umfangs- (Quer-) Richtung und die Längsverstreckung wird zusätzlich über die Abzugswalzengeschwindigkeitsdifferenz eingestellt. Eine Erhöhung der Walzenabzugsgeschwindigkeit derart, daß der Längsreckgrad deutlich über dem Querreckgrad liegt, ist nur eingeschränkt möglich, da die Reckblase dann zu platzen droht.

Es stellte sich daher die Aufgabe, eine Wursthülle auf Polyamidbasis zu entwickeln, die neben den in der Einleitung aufgeführten positiven Eigenschaften der bekannten Polyamidhüllen insbesondere ein für die Anwendung als Brühwursthülle notwendiges Schälverhalten zeigt. Der Schwerpunkt der Aufgabe lag in der Reduzierung der Gefahr des Längsaufplatzens der gekochten Würste, zum Beispiel beim Anschneiden.

Erfindungsgemäß gelang die Behebung dieses gravierenden Mangels durch die Bereitstellung einer mindestens 4-schichtig coextrudierten, biaxial verstreckten, schlauchförmigen nahtlosen Brüh- und Kochwursthülle mit verbesserter Aufreißcharaktersitik im gefüllten Zustand, verbunden mit einer reduzierten Neigung des Aufplatzens in Längsrichtung, enthaltend mindestens zwei Schichten überwiegend aus aliphatischem Polyamid, die die innen- und außenliegenden Schlauchoberflächen bilden, und mindestens zwei weitere Schichten, die durch die innen- und außenliegenden Polyamidschichten eingeschlossen sind, wobei mindestens eine der eingeschlossenen Schichten wasserdampfsperrend wirkt und polyolefinischen Charakter aufweist und mindestens eine weitere der eingeschlossenen Schichten eine hohe sauerstoffsperrende Wirkung aufweist und überwiegend aus Ethylenvinylalkoholcopolymeren besteht, dadurch gekennzeichnet, daß der Quotient aus der Weiterreißfestigkeit in Querrichtung und der Weiterreißfestigkeit in Längsrichtung zwischen 0,65 und 0,85 liegt, wobei der Flächenreckgrad des Folienproduktes zwischen 8 und 11 liegt.

Die Herstellung einer solchen Schlauchfolie erfolgt üblicherweise nach dem Double-Bubble-Verfahren, wobei ein über eine Kreisringdüse extrudierter Primärschlauch abgekühlt wird und dann nach Wiedererwärmung auf Verstrecktemperatur biaxial simultan in einer sogenannten Reckblase verstreckt wird.

Überraschenderweise zeigt es sich, daß durch Zulassung eines hohen Querrückschrumpfes im Anschluß an die erste biaxiale Verstreckung die Schlauchfolie in einer zweiten Blase bei für die Festkörperverstreckung notwendigen Temperaturen in Längsrichtung nachverstreckt werden kann, so daß der Gesamtquerreckgrad zwischen 65 % und 85 % des Gesamtlängsreckgrades ausmacht, ohne daß dadurch eine Schwächung der Materialfestigkeit erfolgt, die dann der gewünschten zylindrischen Form der fertiggestellten Würste abträglich wäre.

Die sich an die biaxiale Verstreckung anschließende Längsnachverstreckung sollte zwischen 1:1,1 und 1:1,5, vorzugsweise zwischen 1:1,25 und 1:1,35 liegen und der zugelassene Querrückschrumpf zwischen erster Reckblase und zweiter Nachverstreckblase zwischen 20 % und 50 %, vorzugsweise zwischen 30 % und 40 % liegen.

Im Anschluß an die Verstreck- und Schrumpfstufen wird in bevorzugter Ausführung eine Thermofixierstrecke angeschlossen um die Dimensionsstabiliät der Schlauchfolie in einem oder mehreren Schritten durch Temperaturbehandlung zu verbessern. Durch diese Wärmebehandlung werden die gewünschten Schrumpfeigenschaften eingestellt, so daß der Darm weitgehend dimensionstabil bei den Lager- und Verarbeitungsbedingungen bleibt. Diese Thermofixierung kann dabei sowohl in einer nachfolgenden dritten Blase als auch direkt an der zweiten Blase (Nachverstreckblase) erfolgen.

Erwartet hätte man, daß der Darm durch den hohen Querschrumpf während der Nachverstreckung eine nicht ausreichende Festigkeit in Querrichtung aufweist, die dazu führt, daß die fertige Wurst nicht in der zylindrischen Form bleibt, sondern durch Queraufweitung deutlich ausbeult. Erfindungsgemäß zeigt sich aber, daß durch die unüblich hohe Längsverstreckung und anschließende Wärmebehandlung der Darm eine exakte Kalibermaßhaltigkeit erreicht und zudem das Risiko des Längsaufreißens deutlich reduziert ist.

Durch den Einsatz einer solchen mehrschichtigen Schlauchfolie mit dem erfindungsgemäß eingestellten Quotienten der Weiterreißfestigkeiten in Quer- und Längsrichtung gelingt es, eine Hülle bereitzustellen, die allen in der Einleitung beschriebenen Anforderungen genügt, insbesondere ein deutlich verbessertes spiralförmiges Schälverhalten aufweist, das zu einem sicheren Anschneiden ohne Anrisse führt und somit die Neigung zum Längsaufplatzen deutlich reduziert. Überraschenderweise hat sich gezeigt, daß die Herstellung einer solchen Schlauchfolie mittels simultaner biaxialer Verstreckung über den Double-Bubble-Prozeß durch das Längsnachverstrecken der Schlauchfolie in einer zweiten Blase unter Zulassung eines Durchmesserrückschrumpfes möglich ist, ohne daß es zu einem Aufplatzen der Schlauchfolie unter dem Blaseninnendruck während des Herstellprozesses kommt.

Die Herstellung der erfindungsgemäßen Schlauchfolie erfolgt vorzugsweise nach dem "double bubble"- beziehungsweise nach dem "injected bubble"- Verfahren, bei dem zunächst das schlauchförmige Extrudat durch intensive Kühlung in den Festkörperzustand überführt wird und dann im weiteren Verlauf des Herstellungsverfahrens der so erhaltene dickwandige Primärschlauch (300 bis 600 μm) auf eine zur Festkörperverstreckung geeignete Temperatur wiedererwärmt wird, um anschließend zwischen zwei dicht abschließenden Walzenpaaren mittels Einschluß eines Druckluftpolsters sowohl in Quer- als auch in Längsrichtung verstreckt zu werden. Die Wiedererwärmung kann in einer oder mehreren Stufen zum Beispiel mittels heißer Luft, Heißdampf, temperiertem Wasserbad und/oder InfrarotStrahlern, die ringförmig den Primärschlauch aufheizen, erfolgen. Anschließend an die erste Verstreckstufe wird in einer zweiten Blase ein definierter Rückschrumpf (Durchmesserreduzierung) des wiederum zwischen zwei Walzenpresseuren mittels Druckluftpolster aufgeblasenen Darms zugelassen und gleichzeitig eine Nachverstreckung in Längsrichtung vorgenommen. Der Durchmesser des Schlauches kann durch Variation des Druckluftniveaus in der anschließend durchzuführenden Thermofixierung gesteuert werden. Mittels der Thermofixierung können exakt die anzustrebenden Schrumpfwerte des Darms über die Parameter Rückschrumpf (Quotient aus Differenz Reckkaliber/Thermofixierkaliber zu Thermofixierkaliber), Themofixiertemperatur und Verweilzeit eingestellt werden. Zum Erreichen einer höheren Flexibiliät kann die Thermofixierung in Gegenwart von Wasser oder Wasserdampf erfolgen. Vor dem Aufwickeln der biaxial gereckten Schlauchfolie sollte diese ausreichend gekühlt werden um die Aktivierung von Schrumpfspannungen auf dem Wickel zu vermeiden. Die biaxial verstreckte Schlauchfolie wird in einem für Brüh- und Kochwurstanwendungen typischen Durchmesserbereich zwischen 30 und 150 mm hergestellt. Die Dicke der coextrudierten Folie bewegt sich in bevorzugten Ausführungsformen zwischen 35 und 70 Mikrometern.

Die relevanten Eigenschaften der nachfolgend beschriebenen Wursthüllen werden nach folgender Methodik ermittelt:

Die Beurteilung der mit den verschiedenen Hüllen hergestellten Würste erfolgt nach der Auskühlung der fertigen Würste auf Kühlhaustemperatur. Zur Herstellung der Musterwürste wurde jeweils das gleiche standardisierte Brühwurstprüfbrät verwendet. Der Fülldruck wird spezifisch für jede Wursthülle eingestellt.

Aufreißlänge:

Der gefüllte Darm (Fertigkaliber 65 mm, Länge 38 cm) wird mittig halbiert und an beiden Seiten längs 3 mm mit einem scharfen Messer eingeschnitten. Danach wird eine definierte Gewichtsbelastung auf das geklippte Wurstende aufgebracht und die bei dreimaliger Belastung (mit Entspannung) gemessene Einreißlänge ermittelt. Die Messung wird dreimal wiederholt und ein Mittelwert bestimmt. Liegen die einzelnen Meßwerte innerhalb einer tolerierbaren Standardabweichung wird der Meßwert als gesichert angesehen und zum Vergleich herangezogen.

Prallheit:

Subjektive Beurteilung der Festigkeit, des Griffes und der Ausformung der Kappen als Indiz für die Prallheit. Die Ausbildung von Raffmarkierungen kann ebenso als Beurteilungskriterium herangezogen werden. Festlegung einer Rangordnung nach Schulnoten (1 = fester Griff, sehr prall bis 6 = weicher Griff, wenig prall).

Schälbarkeit:

Zur Beurteilung der Schälbarkeit wurde der Darm ausgehend von einem mit einem scharfen Messer durchgeführten Einschnitt von der Wurst abgeschält. Die Beurteilung erfolgte über die Vergabe von Schulnoten (1 = sehr gut schälbar bis 6 = sehr schlecht schälbar). Eine sehr gute Beurteilung setzte voraus, daß der Darm sich streifenförmig ( ca. 3- 5 mm breite Streifen ) spiralartig von der Wurst abschälen läßt, ohne dabei zu haken oder zu knacken. Reißt man den Darm in eine beliebige Richtung sollte er vorzugsweise wieder in die Querrichtung laufen (einreißen), keinesfalls aber zu einem bevorzugten Längsaufreißen neigen.

Zylindrische Form:

Die zylindrische Form, d.h. die Konstanz des Fertigkalibers über der Wurstlänge wird im Abstand von 1 cm bei einer durchschnittlichen Wurstlänge von 38 cm gemessen und als Beurteilung die Standardabweichung vom Mittelwert errechnet. Die Messung erfolgt ca. 3 cm von den Kappen entfernt, um die Clipeinflüsse zu reduzieren.

Weiterreißfestigkeit:

Prüfung nach DIN 53363 - Weiterreißversuch in Quer -und Längsrichtung.
Der Gegenstand der Erfindung soll anhand der folgenden Beispiele näher erläutert werden.

**Beispiele:**

Die nachfolgend aufgeführten Beispiele wurden anhand biaxial verstreckter Schlauchfolien, Durchmesser 60 mm, realisiert. Die aus unterschiedlichen Polymeren bestehenden Schichten der erfindungsgemäß coextrudierten Hüllen und der in Vergleichsbeispielen eingesetzten Hüllen werden wie folgt abgekürzt:

| PA | Polyamid 6 | z. Bsp.: Durethan B 38 F (Bayer AG) |
| PO | Propylen-basierndes Copolymer | z. Bsp.: Admer QF 551 (Mitsui Chemicals) |
| XX | Ethylen-Vinylalkohol-Copolymer | z. Bsp.: EVAL LC F 101 BZ (Kuraray) |
| aPA | teilaromatisches Copolyamid | z. Bsp.: Selar PA 3426 (Du Pont) |
| MB | Masterbatch auf Basis Polyamid 6 | z. Bsp.: Farbmasterbatch PA weiß |
| AB | Antiblockmasterbatch | z. Bsp.: PA 6 mit Antiblockausrüstung |

**Beispiel 1.1:**

Folgender Folienaufbau wurde über eine Mehrschichtdüse zu einem Primärschlauch mit 21 mm Durchmesser extrudiert:

$$\text{PA ( 10 } \mu\text{m) / PO (5 } \mu\text{m) / XX (5 } \mu\text{m) / PA (35 } \mu\text{m)}$$

Der Primärschlauch wurde anschließend bei 90°C Oberflächentemperatur simultan biaxial verstreckt. Dabei wurde ein Querreckgrad von $q = 3,9$ und ein Längsreckgrad von $l = 2,8$ eingestellt. Der so hergestellte Schlauch wurde anschließend in einer zweiten Blase längs nachverstreckt mit $1 = 1,3$ bei einer Oberflächentemperatur von 110°C unter Zulassung eine Querrückschrumpfens von ca. 35 % und anschließend in einer dritten Blase thermofixiert. Es ergibt sich daraus ein Gesamtquerreckgrad von $q = 2,9$ und ein Gesamtlängsreckgrad von $1 = 3,6$. Das Reckverhältnis stellt sich zu RV = 78 % ein, der Flächenreckgrad liegt bei $F = 10,4$.

**Vergleichsbeispiel 1.2:**

Folgender Folienaufbau wurde über eine Mehrschichtdüse zu einem Primärschlauch mit 19 mm Durchmesser extrudiert:

$$\text{PA ( 10 } \mu\text{m) / PO (5 } \mu\text{m) / XX (5 } \mu\text{m) / PA (35 } \mu\text{m)}$$

Der Primärschlauch wurde anschließend bei 90°C Oberflächentemperatur simultan biaxial verstreckt. Dabei wurde ein Querreckgrad von $q = 3,5$ und ein Längsreckgrad von $l = 3,0$ eingestellt. Der so hergestellte Schlauch wurde anschließend ohne Nachverstreckung und unter Zulassung eine Querrückschrumpfens von ca. 10 % themofixiert. Es ergibt sich daraus ein Gesamtquerreckgrad von $q = 3,2$ und ein Gesamtlängsreckgard von $1 = 3,0$. Das Reckverhältnis stellt sich zu RV = 105 % ein, der Flächenreckgrad liegt bei $F = 9,5$.
Die eingestellten Verfahrensparameter sind analog dem Beispiel 1.1 und dem Vergleichsbeispiel 1.2 in der nachfolgenden Tabelle 1 zusammengestellt.

**Beispiel 2.1:**

Folgender Folienaufbau wurde über eine Mehrschichtdüse zu einem Primärschlauch mit 23 mm Durchmesser extrudiert:

PA + 5 % AB (15 μm) / PO (4 μm) / PA (15 μm) / XX (4 μm) / PA + 10 % MB (35 μm)

**Vergleichsbeispiel 2.2:**

Folgender Folienaufbau wurde über eine Mehrschichtdüse zu einem Primärschlauch mit 19 mm Durchmesser extrudiert:

PA + 5 % AB (15 μm) / PO (4 um) / PA (15 μm) / XX (4 μm) / PA + 10 % MB (35 μm)

**Beispiel 3.1:**

Folgender Folienaufbau wurde über eine Mehrschichtdüse zu einem Primärschlauch mit 22 mm Durchmesser extrudiert:

PA (6 μm) / PO (3 μm) / PA+10 % MB + 5 % aPA (14 μm) / XX (5 μm) / PA (14 μm)

**Vergleichsbeispiel 3.2:**

Folgender Folienaufbau wurde über eine Mehrschichtdüse zu einem Primärschlauch mit 19 mm Durchmesser extrudiert:

PA (6 μm) / PO (3 μm) / PA +10 % MB + 5 % aPA (14 μm) / XX (5 μm) / PA (14 μm)

**Beispiel 4.1:**

Folgender Folienaufbau wurde über eine Mehrschichtdüse zu einem Primärschlauch mit 22 mm Durchmesser extrudiert:

PA + 5 % AB (6 μm) / PO (3 μm) / PA (12 μm) / XX (3 μm) / PA+ 10 % aPA + 10 % MB (23 μm)

**Vergleichsbeispiel 4.2:**

Folgender Folienaufbau wurde über eine Mehrschichtdüse zu einem Primärschlauch mit 18 mm Durchmesser extrudiert:

PA (6 μm) + 5 % AB / PO (3 μm) / PA (12 μm) / XX (3 μm) / PA (23 μm) + 10 % aPA + 10 % MB

Tabelle 1

| Aufstellung der Verfahrensparameter und Prüfresultate: | | | | | | | | | |
|---|---|---|---|---|---|---|---|---|---|
| | | Bsp.: 1.1 | Bsp.: 1.2 | Bsp.: 2.1 | Bsp.: 2.2 | Bsp.: 3.1 | Bsp.: 3.2 | Bsp.: 4.1 | Bsp.: 4.2 |
| Primärschlauch-Durchmesser | [mm] | 21 | 19 | 23 | 19 | 22 | 19 | 22 | 18 |

Tabelle 1 (fortgesetzt)

| Aufstellung der Verfahrensparameter und Prüfresultate: | | | | | | | | | |
|---|---|---|---|---|---|---|---|---|---|
| | | Bsp.: 1.1 | Bsp.: 1.2 | Bsp.: 2.1 | Bsp.: 2.2 | Bsp.: 3.1 | Bsp.: 3.2 | Bsp.: 4.1 | Bsp.: 4.2 |
| Reckblasen-Durchmesser | [mm] | 81 | 66 | 86 | 63 | 83 | 64 | 81 | 65 |
| Querreckgrad Reckblase | [-] | 3,9 | 3,5 | 3,7 | 3,3 | 3,8 | 3,4 | 3,7 | 3,6 |
| Längsreckgrad Reckblase | [-] | 2,8 | 3,0 | 2,9 | 2,7 | 2,8 | 3,0 | 2,8 | 3,0 |
| Querrrückschrumpf | [%] | 35 | 10 | 41 | 3 | 38 | 7 | 35 | 8 |
| Thermofixierblase Durchmesser | [mm] | 60 | 60 | 61 | 61 | 60 | 60 | 60 | 60 |
| Nachverstreckung | [-] | 1,3 | 1,0 | 1,3 | 1,0 | 1,3 | 1,1 | 1,3 | 1,0 |
| Gesamt Querreckgrad | [-] | 2,9 | 3,2 | 2,7 | 3,2 | 2,7 | 3,2 | 2,7 | 3,3 |
| Gesamt Längsreckgrad | [-] | 3,6 | 3,0 | 3,8 | 2,7 | 3,6 | 3,3 | 3,6 | 3,0 |
| Quotient der Weiterreißfestigkeiten (quer/längs) | [%] | 75 | 105 | 70 | 120 | 75 | 95 | 75 | 110 |
| Flächenreckgrad | [-] | 10,4 | 9,5 | 10,0 | 8,7 | 9,9 | 10,4 | 9,9 | 10,0 |
| Aufplatzlänge | [mm] | 20 | 90 | 4 | 170 | 15 | 100 | 4 | 120 |
| Schälbarkeit | [-] | 1 | 4 | 1 | 6 | 1 | 5 | 1 | 5 |
| zylindrische Form | [-] | 2 | 2 | 1 | 5 | 2 | 2 | 2 | 3 |
| Prallheit | [-] | 2 | 2 | 1 | 4 | 2 | 1 | 1 | 3 |

**Patentansprüche**

1. Mindestens 4-schichtig coextrudierte, biaxial verstreckte, schlauchförmige nahtlose Brüh- und Kochwursthülle mit verbesserter Aufreißcharakteristik im gefüllten Zustand verbunden mit einer reduzierten Neigung zum Aufplatzen beim Anschneiden des Wurstproduktes, enthaltend mindestens zwei Schichten überwiegend aus aliphatischem Polyamid, die die innen- und außenliegenden Schlauchoberflächen bilden, und mindestens zwei weitere Schichten, die durch die innen- und außenliegenden Polyamidschichten eingeschlossen sind, wobei mindestens eine der eingeschlossenen Schichten wasserdampfsperrend wirkt und polyolefinischen Charakter aufweist und mindestens eine weitere der eingeschlossenen Schichten eine hohe sauerstoffsperrende Wirkung aufweist und überwiegend aus Ethylenvinylalkoholcopolymeren besteht, dadurch gekennzeichnet, daß der Quotient aus der Weiterreißfestigkeit in Querrichtung und der Weiterreißfestigkeit in Längsrichtung zwischen 0,65 und 0,85 liegt, wobei der Flächenreckgrad des Folienproduktes zwischen 8 und 11 liegt.

2. Hülle nach Anspruch 1, dadurch gekennzeichnet, daß das aliphatische Polyamid ein lineares Polyamid (PA) PA 6, PA 66, PA 11, PA 12, und/oder lineares Copolyamid PA 6.66, PA 6.6, PA 6.8, PA 6.9, PA 6.10, PA 6.11, PA 6.12 oder einer Mischung der vorgenannten Polyamide und Copolyamide ist.

3. Hülle nach wenigstens einem der vorstehenden Ansprüche, dadurch gekennzeichnet, daß die überwiegend aus aliphatischem Polyamid bestehenden Schichten mit (teil)-aromatischem Polyamid oder Copolyamid, polyolefinischen(Co-)Polymeren(EVA,EVOH,Ionomerharze,säuremodifizierteEthylen- oder Propylen-Copolymere) oder (Co-)Polyestern oder einer Mischung der vorgenannten Polymere abgemischt werden.

4. Hülle nach wenigstens einem der vorstehenden Ansprüche, dadurch gekennzeichnet, daß eine oder mehrere Schichten mit wasserdampfsperrenden Charakter aus Polyethylen oder Polypropylen oder aus Copolymeren basierend auf Ethylen oder Propylen oder aus Mischungen derselben besteht.

**5.** Hülle nach wenigstens einem der vorstehenden Ansprüche, dadurch gekennzeichnet, daß eine oder mehrere Schichten mit sauerstoffsperrendem Charakter aus EVOH bestehen.

**6.** Hülle nach wenigstens einem der vorstehende Ansprüche, dadurch gekennzeichnet, daß sie gerade zylindrisch oder nach Art eines Kranzdarms oder Natur(form)darms gekrümmt ist.

**7.** Hülle nach wenigstens einem der vorstehenden Ansprüche, dadurch gekennzeichnet, daß eine der Schichten, vorzugsweise die äußere Schicht, pigmentiert ist, wobei die Pigmentierung vorzugsweise über die Zugabe von Masterbatch erfolgt.

**8.** Hülle nach wenigstens einem der vorstehenden Ansprüche, dadurch gekennzeichnet, daß die Herstellung einer solchen Schlauchfolie über eine biaxiale simultane Verstreckung mittels Reckblase (Blase 1) und anschließender Längsnachverstreckung unter Zulassung eines Querrückschrumpfes erfolgt, wobei die Verfahrensschritte Längsnachverstreckung und Thermofixierung sowohl in einer Blase (Blase 2) als auch in zwei getrennten Blasen (Blase 2 und Blase 3) erfolgen können.

**9.** Hülle nach wenigstens einem der vorstehenden Ansprüche, dadurch gekennzeichnet, daß die sich an die biaxiale Verstreckung anschließende Längsnachverstreckung zwischen 1:1,1 und 1:1,5, vorzugsweise zwischen 1:1,25 und 1:1,35 liegt und der zugelassene Querrückschrumpf zwischen erster Reckblase und zweiter Nachverstreckblase zwischen 20 % und 50 %, vorzugsweise zwischen 30 % und 40 % liegt und die Schlauchfolie anschließend zur Erzeugung ausreichender Dimensionsstabilität eine Wärmebehandlung erfährt.

**10.** Hülle nach wenigstens einem der vorstehenden Ansprüche, dadurch gekennzeichnet, daß die Summe aller Schichtdicken der coextrudierten Hülle 35 bis 70 µm, insbesondere 40 bis 65 µm beträgt.

## Claims

**1.** An at least 4-layer coextruded, biaxially stretched, tubular seamless casing for sausages to be heated in water and cooking-sausages, having improved tearing properties in the filled state associated with a decreased tendency to burst open when the sausage product is first cut, containing at least two layers composed predominantly of aliphatic polyamide, which form the inner and outer surfaces of the tube, and at least two additional layers, which are enclosed by the inner and outer polyamide layers, with at least one of the enclosed layers acting as a water vapour barrier and having the structure of a polyolefin and at least one other of the enclosed layers acting as an oxygen barrier and consisting mainly of ethylene vinyl alcohol copolymers, characterised in that the quotient of the tear resistance in the transverse direction and the tear resistance in the longitudinal direction is between 0.65 and 0.85, with the degree of surface stretching of the film product being between 8 and 11.

**2.** A casing according to claim 1, characterised in that the aliphatic polyamide is a linear polyamide (PA) PA 6, PA 66, PA 11, PA 12, and/or linear copolyamide PA 6.66, PA 6.6, PA 6.8, PA 6.9, PA 6.10, PA 6.11, PA 6.12 or a mixture of the aforesaid polyamides and copolyamides.

**3.** A casing according to at least one of the preceding claims, characterised in that the layers consisting predominantly of aliphatic polyamide are mixed with (partly) aromatic polyamide or copolyamide, polyolefinic (co)polymers (EVA, EVOH, ionomer resins, acidically-modified ethylene copolymers or propylene copolymers) or (co)polyesters or a mixture of the aforesaid polymers.

**4.** A casing according to at least one of the preceding claims, characterised in that one or more layers acting as a water vapour barrier consists of polyethylene or polypropylene or of copolymers based on ethylene or propylene or of mixtures of the same.

**5.** A casing according to at least one of the preceding claims, characterised in that one or more layers acting as an oxygen barrier consist of EVOH.

**6.** A casing according to at least one of the preceding claims, characterised in that it is exactly cylindrical or bent in the form of a ring or sausage (shaped) casing.

7. A casing according to at least one of the preceding claims, characterised in that one of the layers, preferably the outer layer, is pigmented, with the pigmenting preferably being produced by the addition of Masterbatch.

8. A casing according to at least one of the preceding claims, characterised in that the production of a tubular film of this kind is carried out by a simultaneous biaxial stretching by means of a stretching bubble (bubble 1) and by means of subsequent further longitudinal stretching, with a return transverse shrinkage being permitted, and the processing steps involving further longitudinal stretching and heat setting can be carried out both in a bubble (bubble 2) and in two separate bubbles (bubble 2 and bubble 3).

9. A casing according to at least one of the preceding claims, characterised in that the further longitudinal stretching following the biaxial stretching is between 1:1.1 and 1:1.5, preferably between 1:1.25 and 1:1.35 and the permitted return transverse shrinkage between the first stretching bubble and the second further stretching bubble is between 20% and 50%, preferably between 30% and 40% and the tubular film subsequently undergoes a heat treatment in order to produce adequate dimensional stability.

10. A casing according to at least one of the preceding claims, characterised in that the sum of all the layer thicknesses of the coextruded casing is from 35 to 70 $\mu$m, in particular from 40 to 65 $\mu$m.

**Revendications**

1. Enveloppe de saucisse à ébouillanter et de saucisse à cuire sans joint, en forme de tuyau, étirée biaxialement, coextrudée, à au moins 4 couches, présentant des caractéristiques d'arrachage améliorées à l'état rempli, liées à une tendance réduite à l'éclatement lors de la coupe du produit de type saucisse, contenant au moins deux couches principalement en polyamide aliphatique, qui forment les surfaces de tuyau interne et externe, et au moins deux autres couches, qui sont incluses par les couches de polyamide interne et externe, où au moins l'une des couches incluses a un effet de barrière à la vapeur d'eau et présente un caractère polyoléfinique et au moins une autre des couches incluses présente un effet marqué de barrière à l'oxygène et consiste principalement en copolymères éthylène-alcool vinylique, caractérisée en ce que le quotient de la résistance au déchirement continué dans la direction transversale et de la résistance au déchirement continué dans la direction longitudinale est situé entre 0,65 et 0,85, le degré d'étirage surfacique du produit en feuille étant situé entre 8 et 11.

2. Enveloppe selon la revendication 1 caractérisée en ce que le polyamide aliphatique est un polyamide linéaire (PA) PA 6, PA 66, PA 11, PA 12, et/ou un copolyamide linéaire PA 6.66, PA 6.6, PA 6.8, PA 6.9, PA 6.10, PA 6.11, PA 6.12 ou un mélange des polyamides et copolyamides précités.

3. Enveloppe selon au moins l'une des revendications précédentes caractérisée en ce que les couches consistant principalement en polyamide aliphatique sont mélangées avec un polyamide ou copolyamide (partiellement) aromatique, des (co)polymères polyoléfiniques (EVA, EVOH, résines ionomères, copolymères d'éthylène ou de propylène modifiés par un acide) ou des (co)polyesters ou un mélange des polymères précités.

4. Enveloppe selon au moins l'une des revendications précédentes caractérisée en ce qu'une ou plusieurs couches à caractère de barrière à la vapeur d'eau consistent en polyéthylène ou en polypropylène ou en copolymères à base d'éthylène ou de propylène ou en mélanges de ceux-ci.

5. Enveloppe selon au moins l'une des revendications précédentes caractérisée en ce qu'une ou plusieurs couches à caractère de barrière à l'oxygène consistent en EVOH.

6. Enveloppe selon au moins l'une des revendications précédentes caractérisée en ce qu'elle est cylindrique droite ou incurvée à la manière d'un boyau en couronne ou d'un boyau (de forme) naturel(le).

7. Enveloppe selon au moins l'une des revendications précédentes caractérisée en ce que l'une des couches, de préférence la couche externe, est pigmentée, la pigmentation ayant lieu de préférence par addition de masterbatch.

8. Enveloppe selon au moins l'une des revendications précédentes caractérisée en ce que la production d'une telle feuille de tuyau a lieu par le biais d'un étirage biaxial simultané au moyen d'une vessie d'étirage (vessie 1) et d'un étirage longitudinal supplémentaire consécutif tandis qu'un retrait transversal est admis, les étapes de procédé étirage longitudinal supplémentaire et thermofixage pouvant avoir lieu aussi bien dans une vessie (vessie 2) que dans deux vessies séparées (vessie 2 et vessie 3).

9. Enveloppe selon au moins l'une des revendications précédentes caractérisée en ce que l'étirage longitudinal supplémentaire qui fait suite à l'étirage biaxial est situé entre 1 :1,1 et 1 :1,5, de préférence entre 1 :1,25 et 1:1,35, et le retrait transversal admis entre la première vessie d'étirage et la seconde vessie d'étirage supplémentaire est situé entre 20 % et 50 %, de préférence entre 30 % et 40 %, et la feuille de tuyau subit ensuite un traitement thermique pour produire une stabilité dimensionnelle suffisante.

10. Enveloppe selon au moins l'une des revendications précédentes caractérisée en ce que la somme de toutes les épaisseurs de couche de l'enveloppe coextrudée est de 35 à 70 µm, en particulier de 40 à 65 µm.